# FASCICULE DE BREVET EUROPEEN

(11) **EP 1 146 808 B1**
(45) Date de publication et mention de la délivrance du brevet: **30.03.2005**
(21) Numéro de dépôt: 00900601.6
(22) Date de dépôt: 18.01.2000
(51) Int. Cl.: A47J 45/07

(54) **USTENSILE CULINAIRE A MANCHE DE PREHENSION AMOVIBLE**
KOCHGESCHIRR MIT EINEM LÖSBAREN GRIFF
COOKING UTENSIL WITH REMOVABLE GRIP HANDLE

(30) Priorité: 28.01.1999 FR 9900962
(43) Date de publication de la demande: 24.10.2001
(73) Titulaire: SEB S.A., 69130 Ecully (FR)
(72) Inventeur: VELO, Lionel, F-74150 Rumilly (FR); MONTGELARD, Michel, F-74960 Cran Gevrier (FR)
(74) Mandataire: Somnier, Jean-Louis
(86) Numéro de dépôt international: PCT/FR2000/000097
(87) Numéro de publication internationale: WO 2000/044269

(56) Documents cités:
- EP-A- 0 852 924
- FR-A- 1 330 214
- FR-A- 2 734 466
- GB-A- 1 457 467
- US-A- 2 712 151
- US-A- 5 887 751

## Description

La présente invention concerne un ustensile culinaire comprenant un récipient et un manche de préhension amovible.

De tels ustensiles sont généralement des casseroles ou des poêles que la poignée amovible permet de ranger et de passer au lave-vaisselle avec un encombrement moindre. Un tel ustensile est divulgué par example par le document EP-A-0852924.

Ces ustensiles comportent sur leur paroi latérale ou sur un rebord périphérique de cette paroi latérale un logement destiné à recevoir une extrémité de la poignée ou manche amovible. Un système à ressort dans cette extrémité du manche permet de solidariser ce dernier de manière fiable au récipient, une pression volontaire devant être exercée sur une partie du système pour libérer le manche.

Ce type de manche amovible, relativement sophistiqué dans un sourci de sécurité, se compose ainsi de plusieurs éléments réalisés en des matériaux divers, métal et plastique, qui doivent être assemblés, ce qui se traduit par un produit assez lourd et un coût de fabrication non négligeable. La réalisation d'un logement adapté sur le récipient implique des opérations d'emboutissage et de soudage successives.

Lourd et relativement cher, ce type de manche est donc adapté à des récipients plutôt massifs et d'une certaine qualité, tels que des casseroles en acier inoxydable.

Il ne convient pas, en revanche, à des récipients légers et bon marché, tels que des casseroles en aluminium, alors que l'intérêt d'un encombrement réduit demeure quels que soient la qualité et le matériau du récipient.

Pour cette raison vraisemblablement, les moules à gateau ou à tarte, souvent en aluminium ou en un alliage métallique léger, n'ont-ils jamais bénéficié d'un manche de préhension, alors que l'apparition des poignées amovibles en faisait des destinataires tout aussi adaptés que les poêles et casseroles. On a donc continué à sortir ces moules du four avec des poignées ou gants de tissu, plus ou moins bons isolants thermiques et souvent peu hygiéniques car susceptibles de venir en contact avec le gateau ou la tarte.

Compte tenu de cet état de la technique, l'invention se propose la réalisation d'un dispositif de préhension adapté à différents types de récipients culinaires, sans exclure les récipients en matériau léger, ce dispositif de préhension devant être simple, bon marché et fiable. Elle se propose également la réalisation d'un récipient adapté à recevoir ledit dispositif de préhension.

L'invention a donc pour objet un ustensile culinaire comprenant un récipient et un manche de préhension amovible adapté à pénétrer par une extrémité dans un logement du récipient.

Ce but est atteint par l'ustensile culinaire selon la revendication 1.

De la sorte, la partie supérieure d'extrémité du manche supporte la partie du rebord du récipient située entre la paroi verticale du récipient et le bord de l'orifice le plus proche de cette paroi verticale. Le bord du récipient est ainsi compris entre les parties supérieure et inférieure d'extrémité du manche.

Complémentairement, ladite butée est constituée par un décrochement entre ladite partie supérieure d'extrémité du manche et le reste de la partie supérieure de celui-ci, ladite partie supérieure d'extrémité s'étendant dans un plan oblique par rapport à la partie supérieure du manche située derrière la butée, de manière à former avec la paroi de cette dernière un dièdre à angle aigu.

Le rebord du récipient reposant pour l'essentiel sur cette partie supérieure d'extrémité, ladite configuration permet de tenir par son manche le récipient dans un plan lègèrement incliné comme l'est le plan de ladite partie supérieure d'extrémité de manche par rapport au plan sensiblement horizonal du reste de la partie supérieure du manche, de sorte que le récipient se trouve calé sous son propre poids contre la butée par l'intermédiaire du bord le plus intérieur de l'orifice de réception.

Dans un mode de réalisation préféré, ladite partie inférieure d'extrémité du manche s'étend au-delà de ladite butée de la partie supérieure sur une distance sensiblement égale à celle qui sépare le bord intérieur du rebord au bord le plus proche ou le plus intérieur de l'orifice de réception.

Le récipient tenu par sa poignée se trouve ainsi calé par sa paroi verticale contre la partie d'extrémité inférieure du manche, celle-ci présentant de préférence, sur son côté adjacent à la paroi verticale du récipient, un bord à courbure concave, particulièrement adapté aux récipients ronds tels que moules à manqué ou à tarte, mais convenant aussi aux récipients à parois droites tels que les moules à cake. Un bord à courbure concave offrira en effet au moins deux points d'appui séparés au récipient, que sa paroi verticale soit droite ou incurvée, pour une plus grande stabilité.

Ainsi obtient-on un ustensile culinaire comportant un dispositif de préhension qui peut être rapidement solidarisé ou désolidarisé du récipient sans comporter de système dynamique, à ressort ou autre.

Le manche de préhension est donc avantageusement réalisé en une seule pièce par moulage en une matière plastique résistant à la température telle qu'un polyamide.

D'autres particularités et avantages ressortiront de la description qui suit, d'un exemple de réalisation considéré à titre non limitatif.

Aux dessins annexés,
- les figures 1A, 1B, 1C sont des vues respectivement de profil, de dessus et de dessous du manche de préhension selon l'invention ;
- les figures 2A et 2B sont des vues respectivement en coupe et de dessus d'un récipient rond adapté à recevoir un manche de préhension ;
- les figures 3A et 3B sont des vues respectivement en coupe et de dessus d'un récipient parallélépipédique adapté à recevoir un manche de préhension ;
- les figures 4A et 4B sont des vues respectivement en coupe longitudinale et de dessus d'un manche de préhension solidarisé à un récipient parallélépipédique ou rond, illustrant ainsi un ustensile culinaire conforme à l'invention.

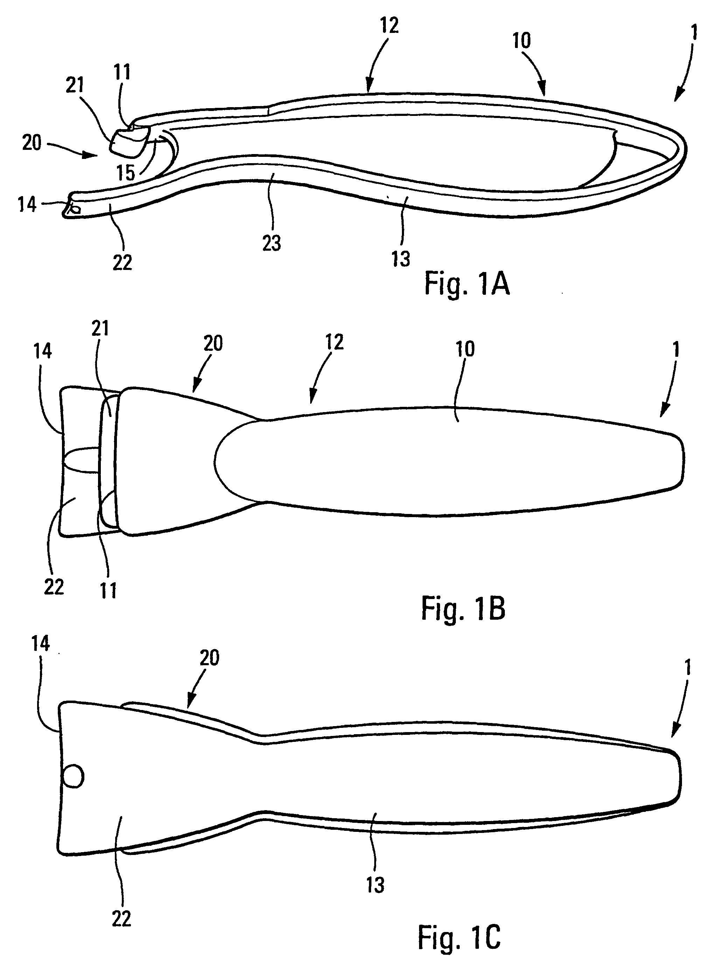

En référence aux figures 1, le manche de préhension 1 est constituée d'une pièce monobloc moulée dans une matière plastique tel qu'un polyamide chargé de fibres, isolant thermique présentant une bonne tenue mécanique et résistant à des températures suffisamment élevées pour supporter le contact avec un plat métallique au sortir du four.

Sur le manche 1, une partie de préhension proprement dite 10 se raccorde, du côté opposé à son extrémité libre, à une partie de fixation 20 de forme générale trapézoïdale et permettant la fixation amovible du manche 1 à un récipient adapté 2, 3.

La partie de fixation 20, terminée en fourche, comprend une partie supérieure d'extrémité courte 21 et une partie inférieure d'extrémité longue 22.

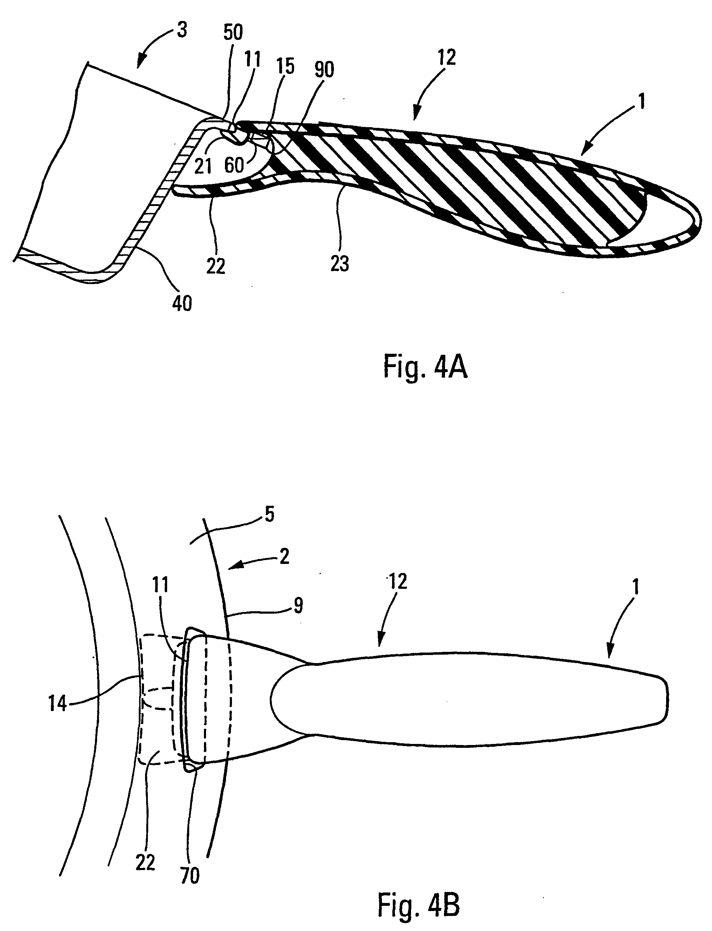

La partie supérieure d'extrémité 21 est limitée par une paroi sensiblement verticale 11 formant butée lors de l'introduction du manche dans le récipient, comme on le verra en référence aux figures 4. Cette butée 11 résulte d'un décrochement entre ladite partie supérieure d'extrémité 21 et le reste de la partie supérieure du manche 12.

La partie supérieure d'extrémité 21 s'étend dans un plan oblique par rapport à cette partie supérieure du manche 12 située derrière la butée 11, de manière à former avec la paroi de la butée 11 un dièdre à angle aigu.

Par ailleurs, la partie d'extrémité supérieure 21 se raccorde par sa paroi inférieure 15 au corps principal du manche 1 en ménageant un espace libre derrière la butée 11, toutes dispositions dont la fonctionnalité apparaîtra en référence aux figures 4.

La partie inférieure d'extrémité 22 s'étend au-delà de la partie supérieure d'extrémité 21 et dans un plan sécant à celui de la partie supérieure 12 du manche située derrière la butée 11.

Le manche étant considéré en section longitudinale, la partie d'extrémité inférieure 22 se raccorde au reste de la partie inférieure du manche 13 par une courbure concave permettant de loger l'index de la main, la partie inférieure 13 située derrière présentant elle-même une courbure convexe pour un plus grand confort de la main.

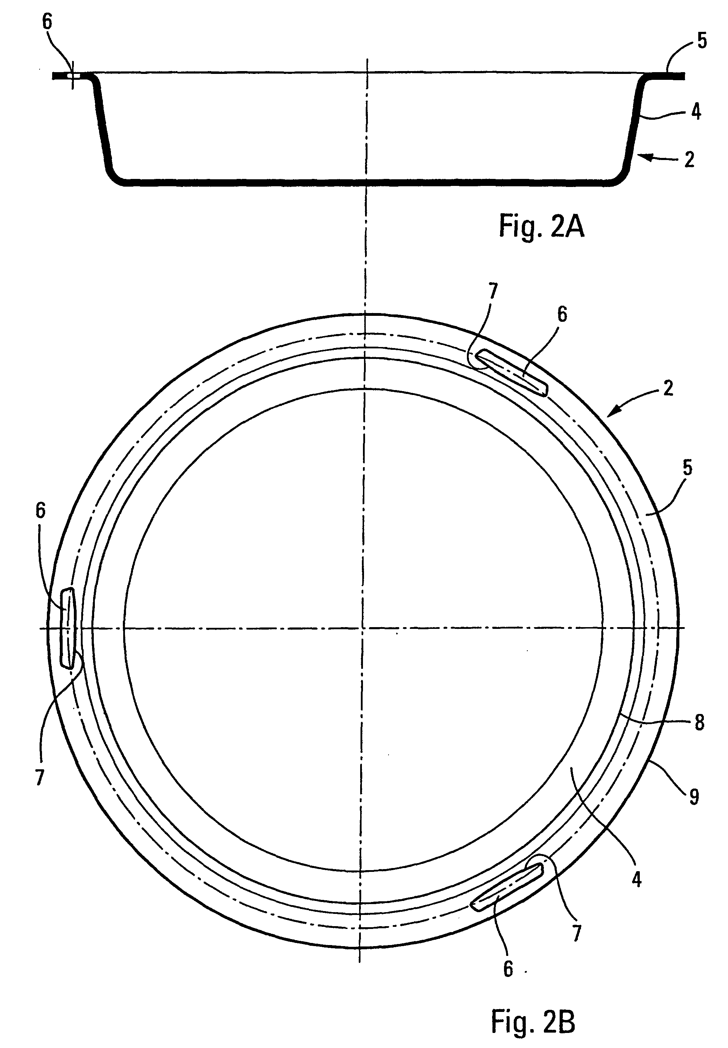

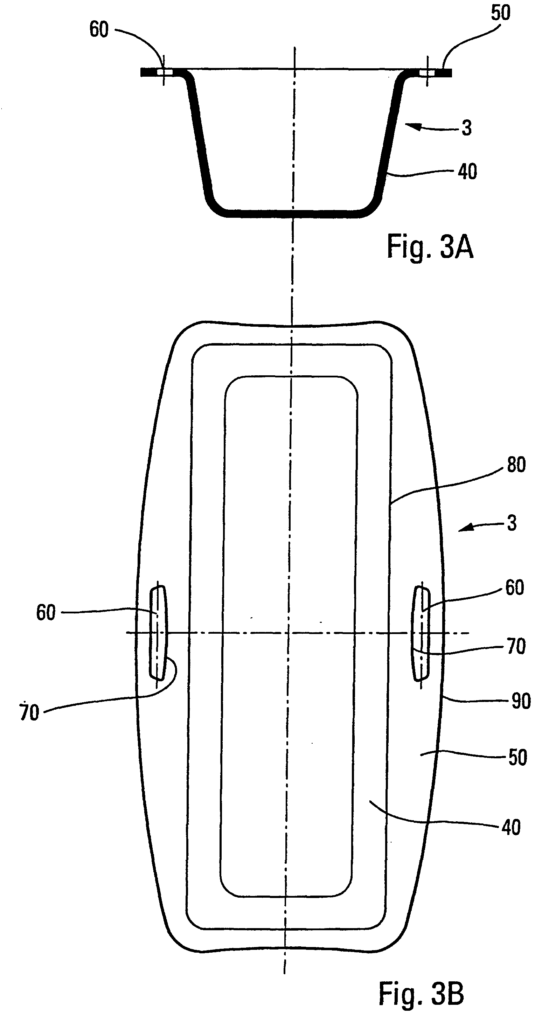

En référence aux figures 2 et 3, le récipient 2 représenté est un moule rond du type moule à manqué, en aluminium ou autre alliage métallique léger, qui présente, en saillie vers l'extérieur sur sa paroi verticale 4, un rebord périphérique 5 dans lequel ont été découpés trois orifices longitudinaux 6 de réception du manche 1, répartis de manière équidistante.

Le récipient 3 est un moule métallique parallélépipédique du type moule à cake présentant, comme le moule à manqué 2, en saillie vers l'extérieur sur sa paroi verticale 40, un rebord périphérique 50 dont chacun des deux grands côtés présente au milieu de la longueur un orifice 60 longitudinal de réception du manche 1.

En référence aux figures 4, pour saisir le moule 2, 3 avec le manche 1, on oriente ce dernier obliquement de manière à pouvoir introduire la partie supérieure d'extrémité 21 par le haut d'un orifice 6, 60. Le raccordement en dièdre à angle aigu de cette partie 21 au reste de la partie supérieure 12 du manche permet de crocheter le moule 2, 3 qui peut ainsi être soulevé immédiatement, le bord 7, 70 le plus intérieur de l'orifice 6, 60 se calant contre la butée 11.

Complémentairement, le bord extérieur 9, 90 du rebord 5, 50 s'étend dans l'espace ménagé à la base de la partie supérieure d'extrémité 21, la paroi inférieure 15 de cette dernière faisant office de butée secondaire pour le bord 9, 90.

La partie d'extrémité inférieure 22 s'étend sous le rebord périphérique 5, 50. Avantageusement, elle s'étend au-delà de la butée 21 sur une distance sensiblement égale à celle qui sépare le bord intérieur 8, 80 du rebord 5, 50 du bord le plus proche 7, 70 de l'orifice 6, 60, de manière à servir de butée à la paroi verticale 4, 40.

La partie inférieure d'extrémité 22 présente, sur son côté adjacent à la paroi verticale 4, 40 du récipient 2, 3, un bord 13 à courbure concave, afin de s'adapter aux récipients ronds ou pour offrir au moins deux points d'appui à des parois verticales planes.

Du fait que la partie inférieure 22 s'étend dans un plan sécant à celui de la partie supérieure 12 du manche située derrière la butée 11, la main de l'utilisateur incline naturellement la partie de préhension 10 du manche 1 de manière à ce que le plan horizontal sur lequel s'aligne le récipient 2, 3 soit non pas celui de la partie supérieure 12 du manche, mais celui de la partie d'extrémité inférieure 22, comme on le voit à la figure 4A.

De la même manière que l'inclinaison de la partie d'extrémité supérieure 21 favorise un calage naturel du récipient 2, 3 contre la butée 11, l'inclinaison de la partie d'extrémité inférieure 22 contribue à caler le récipient contre le bord 14.

On a ainsi un ustensile culinaire comprenant un récipient et un manche de préhension amovible réalisés tous deux à peu de frais, le manche étant une pièce unique moulée et le logement de réception un simple orifice traversant.

Bien entendu, l'invention n'est pas limitée à l'exemple de réalisation que l'on vient de décrire, et on peut apporter à celui-ci de nombreuses variantes sans sortir du cadre de l'invention.

Ainsi le manche pourrait-il se présenter sous une autre forme que celle d'une partie trapézoïdale se raccordant à une partie longitudinale. On pourrait envisager un raccordement progressif de ces deux parties fonctionnelles.

## Revendications

1. Ustensile culinaire comprenant un récipient (2,3) et un manche de préhension amovible (1), le récipient (2,3) comportant une paroi latérale (4,40), un rebord (5,50) faisant saillie vers l'extérieur sur au moins une partie du pourtour de la paroi latérale (4,40), et au moins un orifice (6,60) traversant le rebord (5,50), le manche (1) ayant une extrémité de fixation (20) comportant une partie supérieure d'extrémité (21) qui est limitée par une butée (11) constituée par un décrochement entre ladite partie supérieure d'extrémité (21) et le reste de la partie supérieure (12) du manche, et qui est adaptée à être introduite par le haut dans l'orifice (6,60) jusqu'à la butée (11), **caractérisé en ce que** léxtrémité de fixation (20) comporte une partie inférieure d'extrémité (22) adaptée à s'étendre sous ledit rebord (5,50), la partie supérieure d'extrémité (21) et la partie inférieure d'extrémité (22) étant fixes l'une par rapport à l'autre.

2. Ustensile culinaire conforme à la revendication 1, **caractérisé en ce que** ladite partie supérieure d'extrémité (21) s'étend dans un plan oblique par rapport à la partie supérieure du manche (12) située derrière la butée, de manière à former avec la paroi de cette dernière (11) un dièdre à angle aigu.

3. Ustensile culinaire conforme à l'une des revendications 1 ou 2, **caractérisé en ce que** ladite partie d'extrémité supérieure (21) se raccorde par sa paroi inférieure (15) au corps principal du manche (1) en ménageant un espace libre derrière la butée (11) pour recevoir le bord extérieur (9, 90) du rebord (5, 50) du récipient (2, 3).

4. Ustensile culinaire conforme à l'une des revendications 1 à 3, **caractérisé en ce que** ladite partie inférieure d'extrémité (22) s'étend au-delà de ladite butée (11) de la partie supérieure sur une distance sensiblement égale à celle du bord intérieur (8,80) du rebord (5, 50) au bord le plus proche (7, 70) de l'orifice (6, 60).

5. Ustensile culinaire conforme à l'une des revendications 1 à 4, **caractérisé en ce que** la partie inférieure d'extrémité (22) présente, sur son côté adjacent à la paroi verticale (4, 40) du récipient, un bord (14) à courbure concave.

6. Ustensile culinaire conforme à l'une des revendications 1 à 5, **caractérisé en ce que** ladite partie inférieure d'extrémité (22) s'étend dans un plan sécant à celui de la partie supérieure du manche (12) située derrière la butée (11).

7. Ustensile culinaire conforme à l'une des revendications 1 à 6, **caractérisé en ce que** ladite partie d'extrémité inférieure (22) se raccorde au reste de la partie inférieure (13) du manche par une paroi courbe concave (23) permettant de loger l'index de la main.

8. Ustensile culinaire conforme à la revendication 7, **caractérisé en ce que** le manche (1) présente derrière ladite courbe concave (23) une paroi inférieure (13) à courbure convexe.

9. Ustensile culinaire conforme à l'une des revendications 1 à 8, **caractérisé en ce que** ledit manche (1) est une pièce monobloc.

10. Ustensile culinaire conforme à l'une des revendications 1 à 9, **caractérisé en ce que** ledit manche (1) est moulé en une matière plastique résistant à la chaleur, telle qu'un polyamide.

11. Ustensile culinaire conforme à l'une des revendications 1 à 10, **caractérisé en ce que** ledit récipient (2, 3) est en aluminium ou en alliage métallique léger.

12. Ustensile culinaire conforme à l'une des revendications 1 à 11, **caractérisé en ce que** ledit récipient est un moule métallique rond (2) présentant un rebord périphérique (5) sur lequel sont répartis de manière équidistante trois orifices longitudinaux (6) de réception du manche (1).

13. Ustensile culinaire conforme à l'une des revendications 1 à 11, **caractérisé en ce que** ledit récipient est un moule métallique parallélépipédique (3) présentant un rebord périphérique (50) dont chacun des deux grands côtés présente au milieu de la longueur un orifice longitudinal (60) de réception du manche (1).

## Patentansprüche

1. Kochgeschirr, umfassend einen Behälter (2, 3) und einen lösbaren Griff (1), wobei der Behälter (2, 3) eine laterale Seitenwand (4, 40), einen Rand (5, 50), der einen Vorsprung gegen die obere Außenseite mindestens eines Teils des Umfangs der lateralen Seitenwand (4, 40) bildet, und mindestens eine Öffnung (6, 60), die durch den Rand (5, 50) hindurchgeht, umfasst, wobei der Griff, ein äußeres Befestigungende (20) aufweist, umfassend einen oberen Teils des äußeren Endes (21), das durch einen Begrenzer (11) begrenzt ist, der durch eine Seitenverschiebung zwischen dem oberen Teil des äußeren Endes (21) und dem restlichen oberen Teil (12) des Griffs gebildet wird, und der angepasst ist, durch die obere Höhe in die Öffnung (6, 60) bis zum Begrenzer (11) eingeführt zu werden, **dadurch gekennzeichnet, dass** das äußere Befestigungsende (20) einen unteren Teil des äußeren Endes (22) umfasst, der angepasst ist, sich unter den Rand (5, 50) zu erstrecken, wobei der obere Teil des äußeren Endes (21) und der untere Teil des äußeren Endes (22) gegeneinander fixiert sind.

2. Kochgeschirr gemäß Anspruch 1, **dadurch gekennzeichnet, dass** der obere Teil des äußeren Endes (21) sich in einer schrägen Fläche bezüglich des oberen Teils des Griffs (12) erstreckt, der hinter dem Begrenzer derart angeordnet ist, um mit der Seitenwand dieses letzteren (11) eine V-Stellung mit spitzem Winkel zu bilden.

3. Kochgeschirr gemäß einem der Ansprüche 1 oder 2, **dadurch gekennzeichnet, dass** der obere Teil des äußeren Endes (21) sich mit seiner unteren Seitenwand (15) zum Hauptkörper des Griffs (1) verbindet, indem er einen freien Raum hinter dem Begrenzer (11) bildet, um den äußeren Rand (9, 90) des Randes (5, 50) des Behälters (2, 3) aufzunehmen.

4. Kochgeschirr gemäß einem der Ansprüche 1 bis 3, **dadurch gekennzeichnet, dass** der untere Teil des äußeren Endes (22) sich über den Begrenzer (11) von dem oberen Teil über einen Abstand hinaus erstreckt, der deutlich gleich zu jenem des inneren Randes (8, 80) des Randes (5, 50) ist, der sich am nächsten zum Rand (7, 70) der Öffnung (6, 60) befindet.

5. Kochgeschirr gemäß einem der Ansprüche 1 bis 4, **dadurch gekennzeichnet, dass** der untere Teil des äußeren Endes (22) auf seiner zur vertikalen Seitenwand (4, 40) benachbarten Seite des Behälters einen Rand (14) mit konkaver Krümmung bildet.

6. Kochgeschirr gemäß einem der Ansprüche 1 bis 5, **dadurch gekennzeichnet, dass** der untere Teil des äußeren Endes (22) sich in einer Fläche erstreckt, die schneidend zu jener des oberen Teils des Griffs (12) ist, der hinter dem Begrenzer (11) angeordnet ist.

7. Kochgeschirr gemäß einem der Ansprüche 1 bis 6, **dadurch gekennzeichnet, dass** der untere Teil des äußeren Endes (22) sich mit dem Rest des unteren Teils (13) des Griffs mit einer Seitenwand konkaver Krümmung (23) verbindet, die es erlaubt, den Zeigefinger der Hand unterzubringen.

8. Kochgeschirr gemäß Anspruch 7, **dadurch gekennzeichnet, dass** der Griff (1) hinter der konkaven Krümmung (23) eine untere Seitenwand (13) mit konvexer Krümmung bildet.

9. Kochgeschirr gemäß einem der Ansprüche 1 bis 8, **dadurch gekennzeichnet, dass** der Griff (1) aus einem einstückigen Teil besteht.

10. Kochgeschirr gemäß einem der Ansprüche 1 bis 9, **dadurch gekennzeichnet, dass** der Griff (1) aus einem hitzebeständigen Kunststoffmaterial, wie Polyamid gegossen ist.

11. Kochgeschirr gemäß einem der Ansprüche 1 bis 10, **dadurch gekennzeichnet, dass** der Behälter (2, 3) aus Aluminium oder aus leichtersiedender metallischer Legierung besteht.

12. Kochgeschirr gemäß einem der Ansprüche 1 bis 11, **dadurch gekennzeichnet, dass** der Behälter aus einer runden metallischen Form (2) besteht, die einen Umfangsrand (5) bildet, auf dem in äquidistanter Weise drei longitudinale Öffnungen (6) zur Aufnahme des Griffs (1) verteilt sind.

13. Kochgeschirr gemäß einem der Ansprüche 1 bis 11, **dadurch gekennzeichnet, dass** der Behälter aus einer metallischen, parallelflächigen Form (3) besteht, die einen Umfangsrand (50) bildet, von dem jede der zwei großen Seiten in der Längenmitte eine longitudinale Öffnung (60) zur Aufnahme des Griffs (1) bildet.

## Claims

1. A cooking utensil comprising a container (2, 3) and a detachable gripper handle (1), the container (2, 3) comprising a side wall (4, 40), a rim (5, 50) projecting outwards over at least part of the periphery of the side wall (4, 40), and at least one orifice (6, 60) extending through the rim (5, 50), the handle (1) having a fixing end (20) comprising an upper end part (21) which is limited by a stop (11) formed by an offset between the said upper end part (21) and the rest of the upper part (12) of the handle, and which is adapted to be introduced from the top into the orifice (6, 60) as far as the stop (11), **characterised in that** the fixing end (20) comprises a bottom end part (22) adapted to extend beneath the said rim (5, 50), the upper end part (21) and the bottom end part (22) being fixed relative to one another.

2. A cooking utensil according to claim 1, **characterised in that** the said upper end part (21) extends in an oblique plane relative to the upper part (12) of the handle situated behind the stop, so as to form an acute-angle dihedron with the wall of the stop (11).

3. A cooking utensil according to claim 1 or 2, **characterised in that** the said upper end part (21) is connected by its bottom wall (15) to the main body of the handle (1) with the formation of a free space behind the stop (11) to receive the outer edge (9, 90) of the rim (5, 50) of the container (2, 3).

4. A cooking utensil according to any one of claims 1 to 3, **characterised in that** the said bottom end part (22) extends beyond the said stop (11) of the upper part over a distance substantially equal to that of the inner edge (8, 80) of the rim (5, 50) to the closest edge (7, 70) of the orifice (6, 60).

5. A cooking utensil according to any one of claims 1 to 4, **characterised in that** the bottom end part (22) has, on its side adjacent the vertical wall (4, 40) of the container, an edge (14) of concave curvature.

6. A cooking utensil according to any one of claims 1 to 5, **characterised in that** the said bottom end part (22) extends in a plane which is secant to that of the upper part of the handle (12) situated behind the stop (11).

7. A cooking utensil according to any one of claims 1 to 6, **characterised in that** the said bottom end part (22) is connected to the rest of the bottom part (13) of the handle by a concave curved wall (23) providing a seat for the index finger.

8. A cooking utensil according to claim 7, **characterised in that** the handle (11) has behind the said concave curve (23) a bottom wall (13) with convex curvature.

9. A cooking utensil according to any one of claims 1 to 8, **characterised in that** the said handle (1) is a monobloc part.

10. A cooking utensil according to any one of claims 1 to 9, **characterised in that** the said handle (1) is moulded from a heat-resistant plastic such as a polyamide.

11. A cooking utensil according to any one of claims 1 to 10, **characterised in that** the said container (2, 3) is of aluminium or light metal alloy.

12. A cooking utensil according to any one of claims 1 to 11, **characterised in that** the said container is a round metal mould (2) having a peripheral edge (5) over which are distributed in equidistant relationship three longitudinal orifices (6) to receive the handle (1).

13. A cooking utensil according to any one of claims 1 to 11, **characterised in that** the said container is a parallelepipedal metal mould (3) having a peripheral rim (50) each of the two major sides of which has at the centre of the length a longitudinal orifice (60) to receive the handle (1).
